# EUROPEAN PATENT APPLICATION

(11) **EP 1 733 664 A1**
(43) Date of publication of application: **20.12.2006**
(21) Application number: 06009526.2
(22) Date of filing: 09.05.2006
(51) Int. Cl.: A47J 43/07

(54) **Apparatus for making soup**

(30) Priority: 18.06.2005 US 160319
(71) Applicant: Happliance Corporation, Canton MI 48188 (US)
(72) Inventor: Xu, Zhaoxia, Ypsilanti, MI 48197 (US); Peng, Zheng, Ypsilanti, MI 48197 (US)
(74) Representative: Symons, Rupert Jonathan

(57) **Abstract**

An automated soup making apparatus **(100)** which comprises a container **(102)** having an open top for holding foods, a cap **(104)** removably installed on the top of container **(102),** a heating element **(110)** for heating foods disposed inside container **(102),** a blade **(108)** installed inside container **(102)** for chopping foods, a base **(116)** disposed underneath container **(102)** for supporting container **(102),** a motor **(118)** installed inside base **(116)** and operationally coupled with blade **(108)** for driving blade **(108)** through repeating chopping cycles. Apparatus **(100)** incorporates chopping and cooking of foods into one single apparatus for making soups. Other benefits include temperature control for optimized heating or chopping of foods, automated stirring for uniform heating and minimized risk of burning of foods, and spillage prevention.

## Description

This invention generally relates to cooking/food processing apparatuses. More specifically, although not exclusively, this invention relates to soup making apparatus.

For centuries, soup has been the first resort of a special dinner. Soups are not just delicious. They are comforting and warming in the winter and cooling and refreshing in the summer.

People sip, slurp, and spoon soup not only for basic sustenance but also to stay healthy. Cooking vegetables in water releases their healing bioflavonoids into the liquid without destroying their powerful antioxidant properties. Soups that feature vegetables, beans, or rice add fibre and nutrients to the diet.

Small children at an early age rely on liquid foods, such as soups. Some in the senior population prefer liquid foods or soups due to their reduced digestive capability.

Soups are either made from scratch or are prepared from a canned soup product. As might be expected, the traditional way of preparing soups from scratch or from a can has distinct disadvantages and drawbacks.

For example, in the case of canned soups, the entire contents of the can is often heated regardless of the number of servings desired. Similarly, in the case of soup made from scratch, a large quantity must be prepared. Invariably, a certain portion of the soup remains unused and oftentimes is discarded. The aforementioned problems are further compounded when more than one type of soups are served.

Another distinct disadvantage involves the amount of time necessary to prepare soups. Commonly used soup cooking apparati are slow cookers or the like in which soups are cooked at low temperatures for extended time, for example, several hours. This is to reduce the requirement of attendance, for example, to avoid spillage, to minimize the requirements on stirring, etc., but significant time is required. As a matter of fact, the longer the soup is cooked, the more nutrients are lost. Extended cooking will also damage the texture of foods, especially for vegetables.

Thirdly, periodic stirring is required to assure uniform cooking of the entire contents of a container and to avoid the burning of foods on the container bottom. As a result, extensive efforts have to be spent. Steam cooking of soups is used in some commercial equipment to avoid burning of foods, but the equipment is prohibitively expensive and, obviously, is not quite suitable for household use.

The problems may be more extreme when baby foods are prepared. Baby foods are normally cooked for longer time to soften foods to an extent suitable for babies. In order to shorten the process, quite often, foods are mixed and blended before or after boiling or cooking. Constant stirring and checking on potential spillage are required. This two-step soup making process, namely cooking and then chopping separately, is time consuming and inconvenient.

In order to solve at least some of the above-mentioned problems, some patents have been granted.

For example, US Patent 6,065,861, discloses a soup making apparatus, which can perform blending and boiling functions so as to separate dregs from juice or soup to produce an edible soup or juice. The proposed apparatus has two containers. Users can use one container to initially separate juice or soup from undesired solids and then transfer the soup or juice into the other container, a heating container, to boil the same.

US Patent 4,817,510, describes a soup cooking apparatus, into which air is supplied for mixing or stirring purposes. Users are required to prepare raw foods for making soups using the apparatus, for example, chopping foods. The supply of air into the fluid container requires an air pump, which complicates the system, resulting in a more expensive product.

Accordingly, the present invention provides apparatus for the making of soup, preferably the automated making of soup.

The apparatus comprises a container having an open top for holding foods, preferably a cap installed on the top of the container for closing up the open top thereof, heating means for heating foods disposed inside the container, blade means, preferably removably, installed inside the container for chopping foods, a motor or other drive means operationally coupled with the said blade means for driving said blade means through repeating chopping cycles. Additionally, there may be provided a temperature sensor for monitoring the temperature of foods for optimized heating of foods and/or a spillage-preventing device to prevent spillage from happening.

The blade means preferably sweeps across food pieces in an intermittent operation, in which it preferably dwells for a predetermined dwell period near the end of each chopping cycle. Such intermittent operation can afford relief to the motor from constant chopping of foods, thereby extending the utility life of the motor. When rotating at a relatively lower speed, the chopping blade may serve as a stirrer, for example for a more uniform heating and for avoiding local burning of foods.

The heating element preferably heats foods in an intermittent operation. The intermittent heating of foods may be provided to further reduce the risk of local overheating or burning of foods.

The apparatus may have a spillage prevention mechanism to avoid potential spillage for worry-free cooking.

The heating element may be immersed into the soup such that the heating efficiency is extraordinarily high, as a result, saving time and energy.

Accordingly, the followings are some of the non exclusive objects, features, and advantages of the present invention.

It is an object of the present invention to provide a soup making apparatus for use to prepare tasteful soups.

It is another object of the present invention to provide an automated (a "One Touch for All") soup making apparatus.

It is a further more object of the present invention to provide a soup making apparatus which can cook soups faster and thereby preferably save time.

It is a still further more object of the present invention to provide a soup making apparatus that can be conveniently used to prepare foods for babies and/or elderly people who suffer from reduced digestive capability.

It is an advantage of the present invention that this apparatus may be virtually hands free for making soups.

In order that the invention may be more fully understood it will now be described, by way of example only and with reference to the accompanying drawings, in which:
Figure 1 illustrates a cross-sectional view of a first embodiment of apparatus according to the present invention.
Figure 2 is a detailed view of part of the apparatus of Figure 1.
Figure 3 is a block diagram of the control circuit for the apparatus of Figure 1.
Figure 4 is an exploded perspective view of the apparatus of Figure 1.
Figure 5 illustrates a block diagram of a method according to the invention.
Figure 6 illustrates a cross-sectional view of a second embodiment of apparatus according to the invention.
Figure 7 illustrates a cross-sectional view of a third embodiment of apparatus according to the invention; and
Figure 8 is a detailed view of the apparatus of Figure 7.

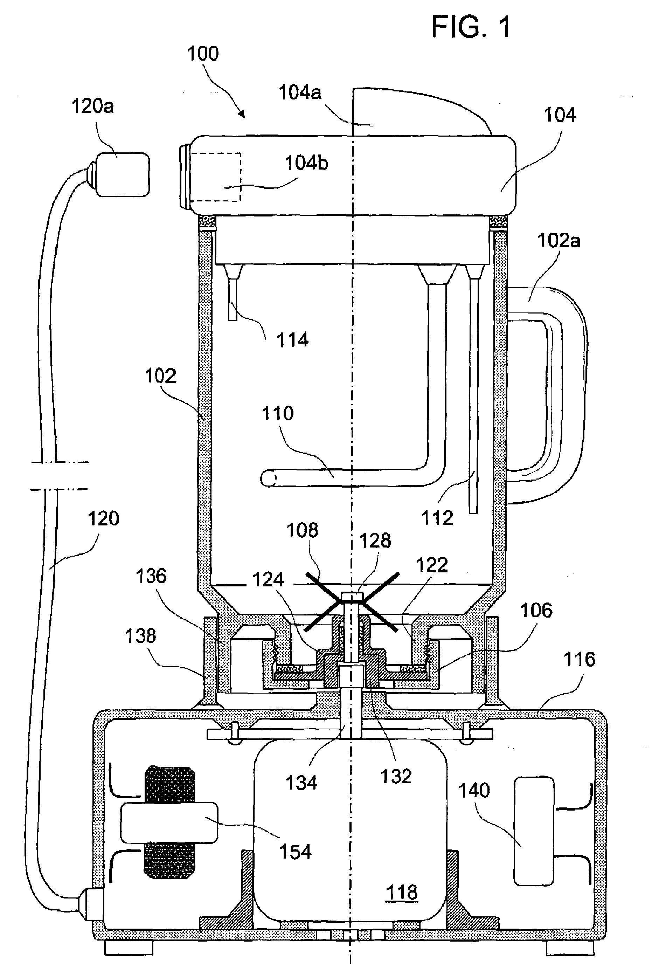

Reference is made to Figure 1. which illustrates a cross-sectional view of an embodiment of the present invention, a soup making apparatus **100.** Apparatus **100** comprises a container **102,** a top cap **104,** a bottom cap **106,** a chopping blade **108,** a heating element **110,** a temperature sensor **112,** a spillage preventing sensor **114,** a base **116,** a motor **118,** and a cable **120.**

Container **102,** having an open top and an open bottom, is provided for holding foods. A grasp handle **102a** is fixedly installed on the sidewall of container **102** for use of handling container **102.** Cap **104** is removably installed on the top of container **102** for closing up the open top thereof. A cap handle **104a** is provided on the top of cap **104** for use of handling cap **104.** Cap **106,** removably engaged with a cylindrical wall **122** emanating from the bottom of container **102** downwards, is provided for closing up the open bottom thereof and holding blade **108** in position. Wall **122** forms the open bottom of container **102** and has a cylindrical conFigureuration.

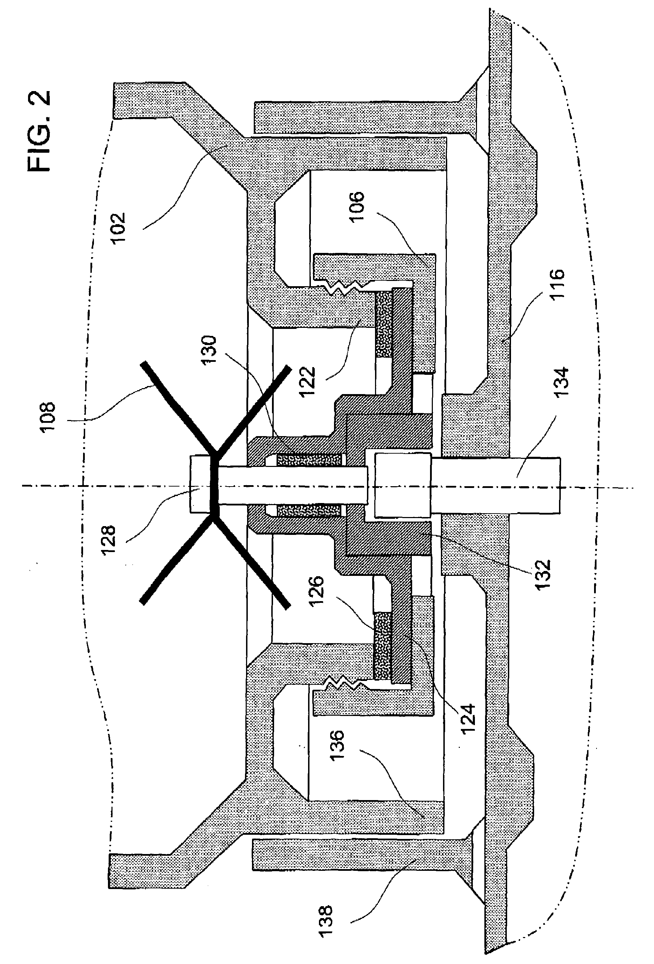

As more clearly illustrated in Figure 2, which illustrates an exploded cross-sectional view of blade **108** and the neighboring components in Figure 1, blade **108** is installed on the bottom of container **102** through a seal housing **124.** The bottom of housing **124** has a circular flat conFigureuration, which fits into the bottom of cap **106.** When cap 106 is tightened onto the bottom of container 102 through screws thereof, housing **124** is held In position in between the horizontal bottom surface of wall **122** and the bottom of cap **106.** A first seal **126** is disposed in between housing **124** and wall **122** for sealing off the interface thereof. Blade 108 is fixedly engaged with the upper portion of a blade shaft **128,** which extends downwards into housing **124.** A second seal **130** creates a seal by being squeezed against housing **124** and shaft **128** to seal off the interface thereof. A coupling element **132,** fixedly engaged with the lower portion of shaft **128,** removably receives the square head of a motor shaft **134** for transferring rotating force.

Reference is made to Figure 1, again. Heating element 110, installed on the bottom of cap **104,** is provided for heating foods disposed inside container 102. Heating element **110,** an electrical resistance type heater, extends downwards into container **102** and is immersed into foods to be cooked.

Temperature sensor **112** is provided for measuring the temperature of foods. Sensor **112** is installed on the bottom of cap **104** and extends downwards into container 102. The lower portion of sensor **112** is immersed into foods.

Spillage-preventing sensor **114** is provided for detecting and preventing potential spillage. Sensor **114** is installed on the bottom of cap **104** and protrudes downwards. Sensor **114** is disposed above foods with a predetermined clearance. When spillage is about to happen, the bubbles of foods are in contact with sensor **114.** Either the temperature is measured or an electric potential or current is generated. The signal is then sent to a control module **140** of apparatus **100** to shut off the electrical power to heating element **110** to prevent the spillage from happening.

Base **116** is provided for supporting container **102** from the bottom and for housing motor **118.** An outer wall **136** of the bottom portion of container **102** sits into an upstanding cylindrical wall **138,** which is installed on the top surface of base **116.** When container **102** being locked in position, coupling element **132** is in the position to removably receive the square head of shaft **134.**

Motor **118** is installed inside base **116.** Motor shaft **134** extends upwards through an aperture on the top surface of base **116.** The square head of shaft **134** is removably engaged with coupling element **132.**

Cable **120** is provided for transferring electrical power to heating element **110** from base **116** and for the communication of signals between control module **140** and sensors **112** and **114.** A connector **120a** is fabricated onto the upper end of cable **120** and is adapted to removably engage with a terminal **104b,** which is installed on the side of cap **104.**

Control module **140,** installed inside housing **116.** is provided for controlling various functions of apparatus **100.**

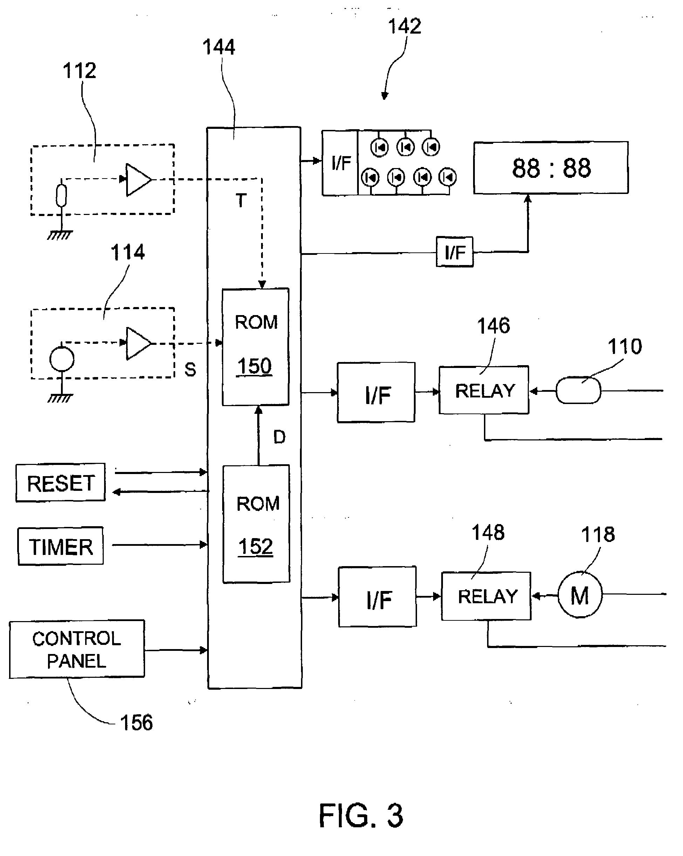

Control module **140** includes a control circuit **142,** as the blocked diagram shown in Figure 3. Circuit **142** comprises a microcomputer **144,** which controls various functions of apparatus **100,** a relay **146.** which activates heating element **110,** and a relay **148,** which activates motor **118.**

Microcomputer **144** is provided with ROM and RAM for data memory, and further provided with I/O ports and AID converters as interfaces. The aforementioned ROM's comprises a ROM **150** containing control programs related to the performance of all the soup making processes and a ROM **152,** which memorizes referenced data.

The temperature signal from sensor **112** is taken by microcomputer **144.** The signal is used for controlling heating element **110** and/or motor **118.**

Spillage signal from sensor **114** is fed into computer **144** and is used to control heating element **110.** Once a potential spillage is detected, heating element **110** is immediately shut off.

Computer **144** can be such programmed that relay **146** activates heating element **110** intermittently, such that the soup is moderately heated each time to avoid burning of foods onto heating element **110.** This intermittent heating allows more time for the heat generated to transfer to foods. Similarly, relay **148** activates motor **118** intermittently to achieve intermittent chopping and stirring of foods.

A transformer **154,** as shown in Figure 1, is installed inside base **116.** Transformer **154** provides electrical power to control circuit **142** and elements, like indicators, beepers, LCD, etc.

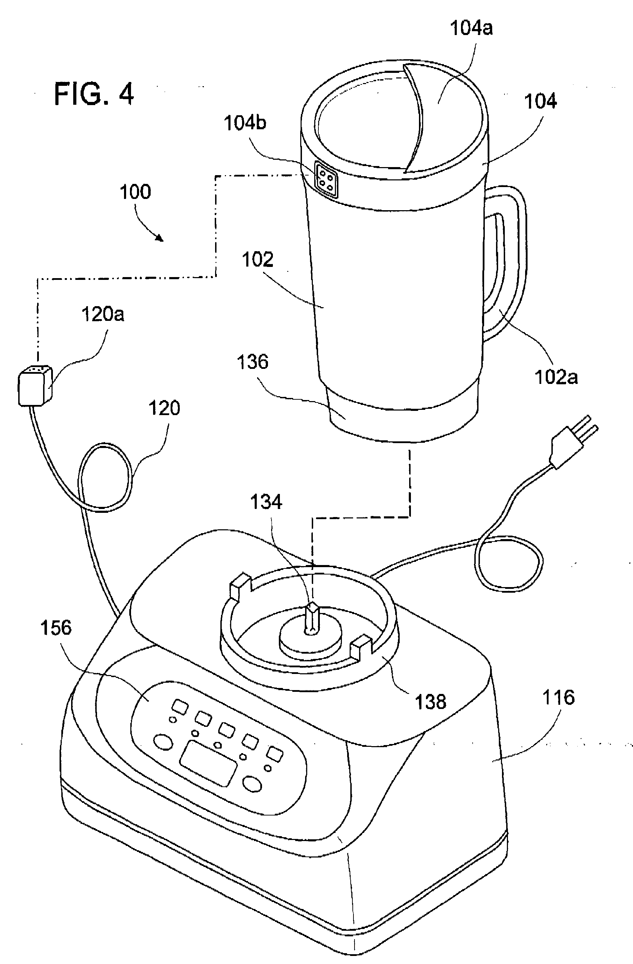

A control panel **156,** attached to base **116,** as more clearly shown in Figure 4, is provided for supporting elements, like switches, indicators, adjusting knobs, beepers, LCD, and so on.

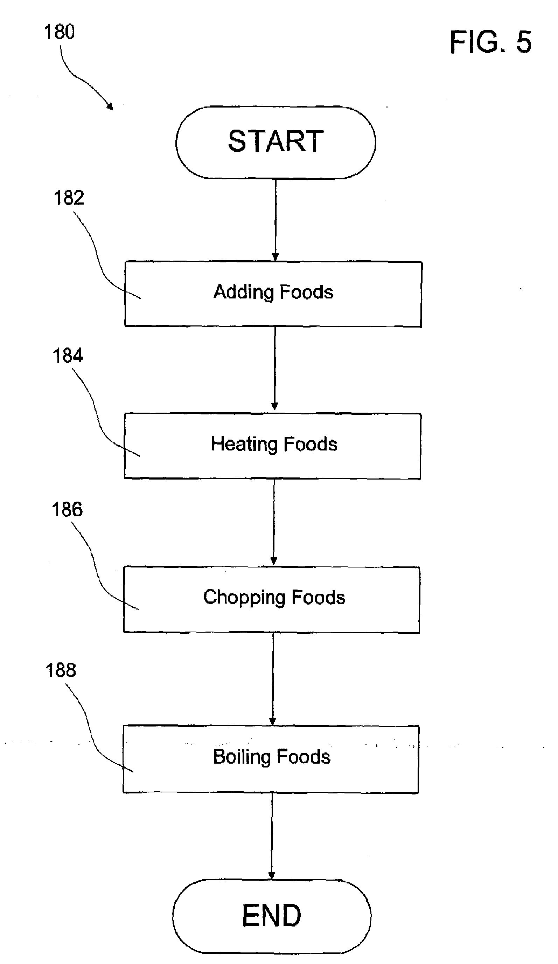

Reference is made to Figure 5, which illustrates a blocked diagram of a soup making process **180,** using soup-making apparatus **100.** Process **180** includes the steps of adding foods **182,** heating foods **184,** chopping foods **186,** and boiling foods **188.**

The step of adding foods **182:** A user first installs container **102** on base **116;** second, adds foods, such as vegetables, meats, spices, soaked beans, soaked rice, etc., into container **102;** third, adds water into container **102** up to the recommended level; fourth, assembles cap **104** on the top of container **102;** fifth, hooks up cable **120;** sixth selects a soup making program and executes the same.

The step of heating foods **184:** Heating element **110** starts to heat foods to a predetermined temperature, which is, preferably, close to the boiling temperature, e.g., 70°C to 100°C. During this stage, since the soup is not cooked or thick yet, heating element **110** can heat foods with full power and bring the temperature to the predetermined one in as short time as possible.

The step of chopping foods **186:** Blade **108** starts to chop foods. The whole chopping process is divided into a plurality of chopping cycles. Within each chopping cycle, blade **108** chops foods for a predetermined time interval, e.g., 10 to 50 seconds, and then dwells for a predetermined time interval, e.g., 10 to 50 seconds. This intermittent chopping process affords relief of constant working of motor **118** at a super high speed, and as a result, extends the utility life of motor **118.** Additionally, the intermittent chopping of foods favors better chopping of foods because it allows larger food pieces to settle down before the next chopping cycle starts.

The step of heating (e.g. boiling) foods **188:** The chopped foods have to be heated (*e.g.* brought to boiling) for a predetermined time period for proper cooking. However, the foods now have been smashed and fully mixed with water. This mixture of foods and water has become much thicker. There are some issues associated with boiling this food mixture. Potential issues include burning of foods onto heating element 110 and uneven heating of foods. In order to solve these problems, an intermittent heating of foods is proposed in this invention disclosure. In this intermittent heating of foods, the whole heating process is divided into a plurality of heating cycles. Within each heating cycle, heating element **110** heats foods for a predetermined time interval, e.g., 5 to 30 seconds, and then dwells for a predetermined time interval, e.g., 10 to 30 seconds. This intermittent heating process allows the heat generated while heating element **110** is in working to dissipate to foods during the time heating element **110** dwells.

In another aspect, to facilitate the heat transferring or more even heating of foods, it is desired that foods move while being heated. A stirring mechanism is proposed in this invention disclosure. In this stirring mechanism, blade **108** sweeps across foods at a predetermined lower speed. In this case, blade 108 serves as a stirrer to bring foods into moving while the same being heated. Better heat transferring will also reduce the risk of burning of foods onto heating element **110.**

Further chopping can be provided after the step of heating (e.g. boiling) foods **188** is satisfactorily accomplished. Apparatus **100** can provide a mixing or chopping function for advanced users to give them the flexibility to add more spices, soup thickening ingredients, etc., in an effort to further enhance the quality of the soup being made after soup making process **180** has been successfully executed.

In operation, a user: first, installs container **102** on base **116** and adds foods and water into container **102;** second. installs cap **104** on the top of container **102** and hooks up cable **120;** third, selects a soup making program; fourth, pushes on the "START" button to execute the soup making program selected.

The whole process is hands free. Apparatus **100** will beep to remind the user when a soup is ready for serving.

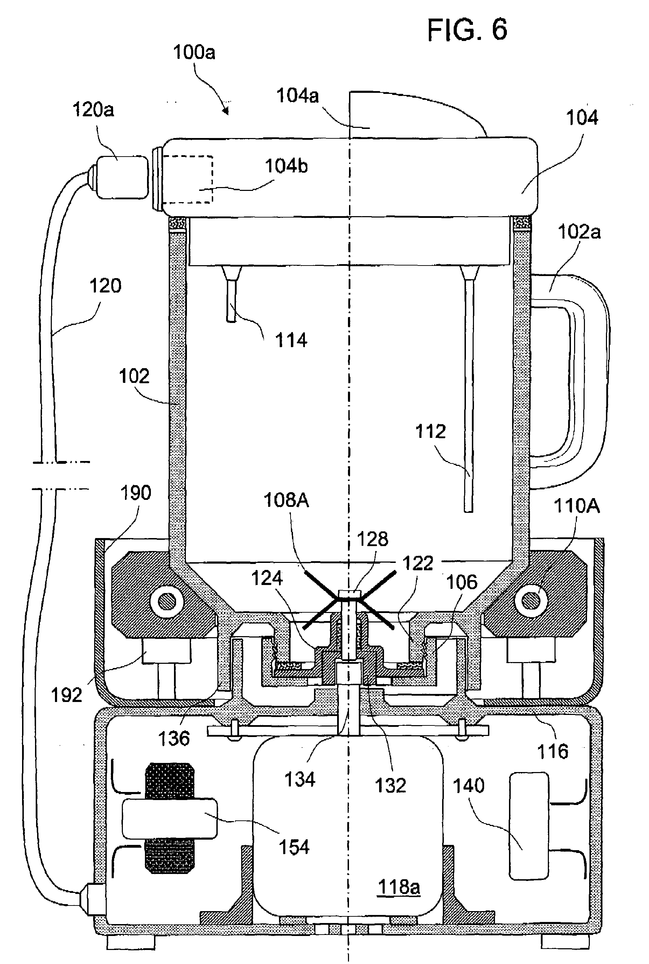

Figure 6 illustrates a cross-sectional view of an alternative design of soup making apparatus **100** in Figure 1, a soup making apparatus **100a.** In apparatus **100a,** heating element **110a** is disposed underneath the bottom of container **102a.** An outer pot **190,** having an open top and an open bottom, is fixedly installed on the upper surface of base **116.** Heating element **110a** is installed inside pot **190** via a heater support **192.** When container **102** is locked into its working position, the outer rim of the bottom of container **102a** sits right on heating element **110,** such that the heat transfer is accomplished through the contacting surface therebetween. Other features of apparatus **100a** are similar to those of apparatus **100.** Reference is made to apparatus **100** for more detailed information.

Although not shown, the heating element **110a** may be protected by a cowl or other cover to prevent unwanted contact therewith during a heating event. The cover may extend from the container **102a** or base **116** or pot **190** or may be a separate cover.

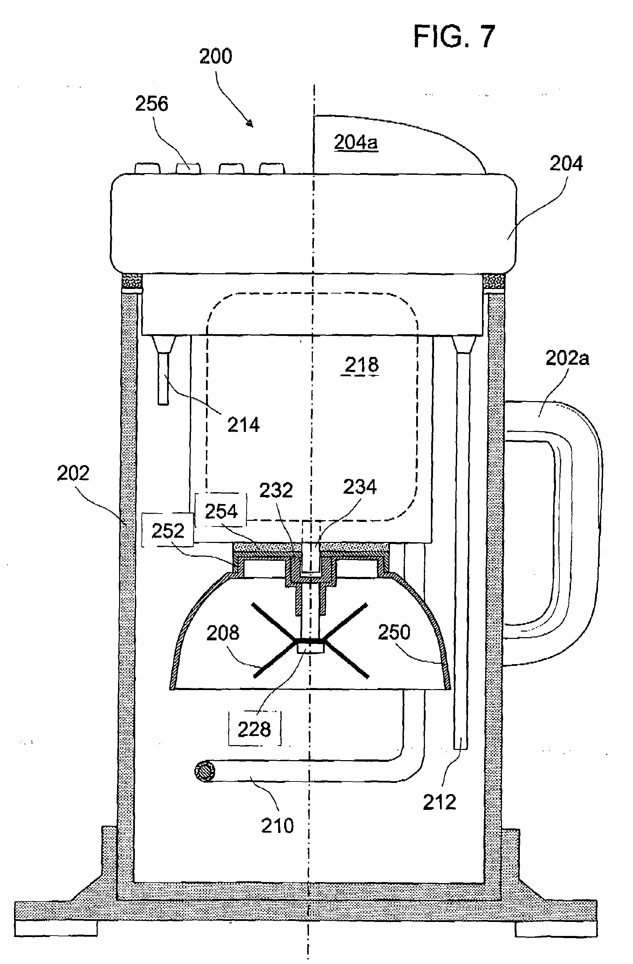

Reference is made to Figure 7, which illustrates a cross-sectional view of another embodiment of the present invention, a soup making apparatus **200.** Apparatus **200** comprises a container **202,** a main body **204,** a chopping blade **208,** a heating element **210,** a temperature sensor **212,** a spillage preventing sensor **214,** and a motor **218.**

Container **202,** having an open top, is provided for holding foods. A grasp handle **202a** is fixedly installed on the sidewall of container **202** for use of handling container **202.** Main body **204** is removably installed on the top of container **202** for closing up the open top thereof. A handle **204a** is installed on the top of main body **204** for use of handling main body **204.**

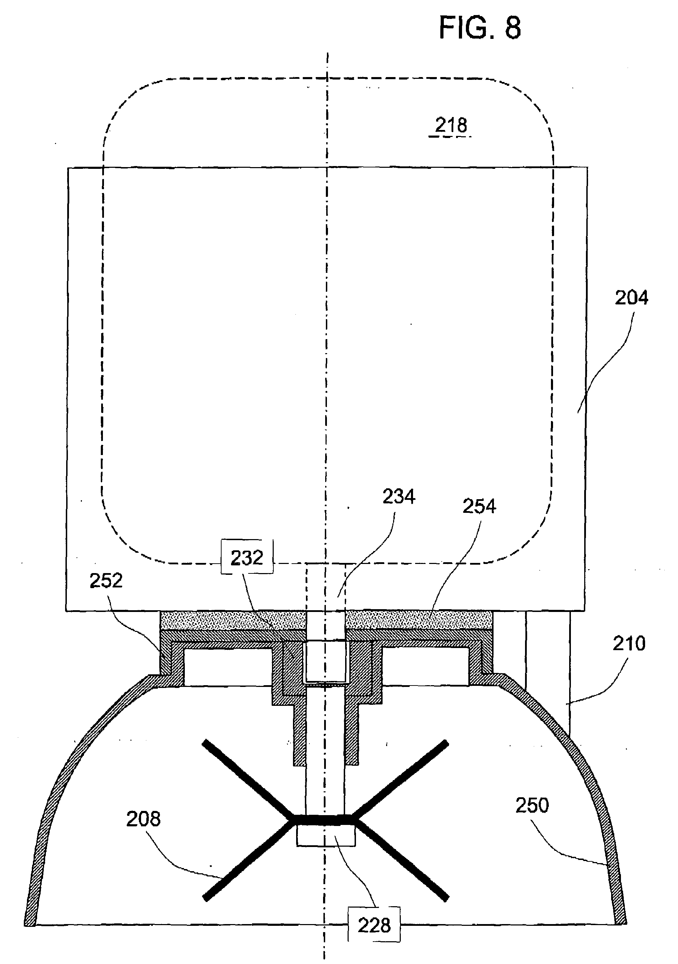

As more clearly illustrated in Figure 8, which illustrates an exploded cross-sectional view of blade **208** and the neighboring components in Figure 7. blade **208** is installed on the bottom of main body **204** and extends downwards into container **202.** Blade **208** is engaged with the lower portion of a blade shaft **228** and disposed inside foods. The upper portion of shaft **228** is fixedly engaged with a coupling element **232,** which removably receives the square head of a motor shaft **234** for transferring rotating force.

A safety cup **250** is provided for safeguarding blade **208.** Cup **250** is lockably installed onto an adapter **252,** which is fixedly installed on the bottom of main body **204.** A seal **254** is disposed in between adapter **252** and the bottom of main body **204** for sealing off the interface thereof to prevent moisture from permeating into the inside of main body **204.**

Reference is made to Figure 7, again. Heating element **210,** installed on the bottom of main body **204,** is provided for heating foods disposed inside container **202.** Heating element **210,** an electrical resistance type heater, extends downwards into container **202** and is immersed into foods to be cooked.

Temperature sensor **212** is provided for measuring the temperature of foods. Sensor **212** is installed on the bottom of main body **204** and extends downwards into container **202.** The lower portion of sensor **212** is immersed into foods.

Spillage-preventing sensor **214** is provided for detecting and preventing potential spillage. Sensor **214** is installed on the bottom of main body **204** and protrudes downwards. Sensor **214** is disposed above foods with a predetermined clearance.

Control panel **256** is installed on the top of main body **204.**

Motor **218** is installed inside main body **204** Motor shaft **234** extends downwards through an aperture on the floor of main body **204.** The square head of shaft **234** removably engages with coupling element **232.**

Other features of apparatus **200** are similar to apparatus **100.** Reference is made to apparatus **100** for more detailed information.

In all cases, the cover **104; 204** may be interlocked with the motor **118; 118a; 218** and/or the heating element **110; 110a; 210** to ensure that the motor **118; 118a; 218** and/or heating element **110; 110a; 210** are not able to operate when the cover **104; 204** is removed.

In some embodiments it may be beneficial to provide a shield over the heating element **110: 210,** for example in areas with significant amounts of lime dissolved in the water, or to ease cleaning operations.

The outer walls of all components may be fabricated from plastics and/or metal materials.

The spill detector 114 may comprise a ball valve, float valve or other physical means or may be electronic or electrical in nature. It may protrude from a wall of the container.

The bases of all embodiments may be provided with non slip and/or vibration damping feet, for example feet fabricated from rubber.

The link 120 need not be a wire, it may be a solid connection or the wire may be provided in a secure and/or solid cover.

Accordingly, readers will see that this soup making apparatus of the present invention can be used to prepare tasteful soups. The whole process is virtually hands free.

The soup making apparatus proposed by the present invention combines the cooking and chopping of foods together into one single apparatus, thereby saving time and minimizing human involvement and chore. Moreover, the provision of controls and/or automatic programs further reduces the amount of input which is necessary from an operator. The inherent safety and other features mean that the apparatus is safe to use and is able to be used by many persons who may otherwise be unable to cook soups.

The chopping blade is able to sweep across food pieces intermittently. This intermittent operation favors better chopping of food pieces and relief of the high-speed motor from constant working. When the chopping blade rotates across foods at a lower speed, it serves as a stirrer to facilitate uniform heating of foods and to minimize the risk of burning of foods onto the heating element.

The heating element is able to heat (e.g. boils) foods in an intermittent operation. This intermittent operation allows the heat generated to dissipate to foods throughout the container while the heating element dwells which, as a result. reduces the risk of burning of foods onto the heating element.

The present invention has been described in an illustrative manner. It is to be understood that the terminology, which has been used, is intended to be in the nature of words of description rather than of limitation.

Although this invention has been described in its preferred forms and structures with a certain degree of particularity, these should not be construed as limiting the scope of the invention but as merely providing illustrations of some of the presently preferred embodiments of this invention.

Thus it is understood that the present disclosure of the preferred forms can be changed in the details of construction and in the combination and arrangement of parts without departing from the spirit and the scope of the invention as hereinafter claimed.

## Claims

1. Apparatus (100; 100a; 200) for the automated making of soup, said apparatus (100; 100a; 200) comprising:
a container (102; 102a; 202) having an open top for holding foods;
heating means (110; 110a; 210) for heating foods disposed inside said container (102; 102a; 202);
blade means (148; 108a; 208) installed inside said container (102; 102a; 202) for chopping foods; and
a motor (118; 118a; 218) operably coupled with said blade means (108; 108a; 208) for driving said blade means (108; 108a; 208) through repeating chopping cycles.

2. Apparatus (100; 100a; 200) according to Claim 1, further comprising temperature sensor means (112; 112a; 212) for detecting the temperature of foods disposed in said container (102; 102a; 202), operable to control said heating means (110; 110a; 210) and/or said blade means (108; 108a; 208).

3. Apparatus (100; 100a; 200) according to Claim 1 or 2, further comprising spillage preventing means (114; 114a; 214) for detecting and preventing potential spillage.

4. Apparatus (100; 100a; 200) according to any of Claims 1 to 3, wherein said motor (118; 118a; 218) provides at least two rated rotation speeds, one predetermined higher speed for chopping foods and one predetermined lower speed for stirring foods.

5. Apparatus (100; 100a; 200) according to any preceding Claim, wherein said heating means (110; 110a; 210) is operable to heat food disposed in said container (102; 102a; 202) in a plurality of different heating cycles.

6. Apparatus (100; 100a; 200) according to Claim 5. wherein said heating means (110; 110a; 210) is operable to heat food disposed in said container (102: 102a; 202) such that within each heating cycle said heating means (110; 110a; 210) heats foods for a predetermined time interval and then dwells for a predetermined time interval, thereby allowing the heat generated to dissipate to foods while said heating means (110; 110a; 210) dwells.

7. Apparatus (100; 100a; 200) according to any preceding Claim, wherein said blade means (108; 108a; 208) is operable to chop food disposed in the container (102; 102a; 202) in a plurality of chopping cycles.

8. Apparatus (100; 100a: 200) according to Claim 7, wherein said blade means (108; 108a; 208) is operable to chop foods disposed in the container (102; 102a; 202), such that within each chopping cycle said blade means (108; 108a) 208) is able to chop foods for a predetermined time interval and then to dwell for a predetermined time interval.

9. Apparatus (200) according to any preceding Claim, further comprising a main body (204) removably installed or installable on the top of said container (202) and wherein said motor (218) is installed inside said main body (204).

10. Apparatus (200) according to Claim 9, wherein the or a temperature sensor (212) is installed on the bottom of said main body (204) extending downwards into said container (202) for detecting the temperature of foods, thereby controlling said heating means (210) and/or said blade means (208) for optimized heating and/or chopping of foods.

11. Apparatus (200) according to Claim 9 or 10, further comprising said or a spillage preventing means (214) installed on the base of said main body (204) protruding downwards for detecting and/or preventing potential spillage.

12. Apparatus (200) according to any of Claims 9, 10 or 11, further including safety means (250) removably installed on the base of said main body (204) for safeguarding said blade means (208) against potential injuries to users.

13. Apparatus (200) according to Claim 12, wherein a blade shaft (228) is installed on said safety means (250) and removably coupled with a motor shaft (234) from said motor (218), wherein said blade means (208) is installed on the lower portion of said blade shaft (228).

14. Apparatus (200) according to Claim 13, wherein said blade means (208) together with said safety means (250) is removable for ease of cleaning after use

15. Apparatus (100; 1 00a), according to any of Claims 1 to 8, wherein:
the container (102; 102a) has an open top and an open bottom and comprises a top cap (104) removably installed on the top of said container (102; 102a);
and a bottom cap (106) removably installed on the bottom of said container (102; 102a) for closing the open bottom of said container (102; 102a);

16. Apparatus (100; 100a) according to Claim 15, further comprising a base (116) disposed, in use, beneath said container (102; 102a) for supporting said container (102; 102a); the motor being (118; 118a) installed inside said base (116).

17. Apparatus (100: 100a) according to Claim 16, further comprising a linkage mechanism (120) operable to communicate between said top cap (104) and said base (116), thereby transferring electrical power and/or control signals between said top cap (104) and said base (116).

18. Apparatus (100: 100a) according to any of Claims 15, 16 or 17, wherein the or a temperature sensor (112; 112a) Is installed on the bottom of said top cap (104) extending downwards into said container (102; 102a) for detecting the temperature of foods disposed therein.

19. Apparatus (100) according to any of Claims 15 to 18 wherein said heating means (110) is installed on the bottom of said top cap (104) extending downwards into said container (102) for heating of foods.

20. Apparatus (100a) according to any of Claims 15 to 18, wherein said heating means (110a) is disposed outside, preferably underneath, said container (102a) for heating of foods disposed therein.

21. Apparatus (100: 100a) according to any of Claims 15 to 20, wherein said blade means (108; 108a) is held in position by said bottom cap (106) when said bottom cap (106) is tightened onto the bottom of said container (102: 102a), whereby said blade means (108; 108a) is removable for ease of cleaning after use.

22. A method of making soups including the following steps;
providing a soup making apparatus, wherein said soup making apparatus includes a container having an open top for holding foods, heating means for heating foods disposed inside said container, blade means installed inside said container for chopping foods, and a motor operationally coupled with said blade means for driving said blade means through repeating chopping cycles;
adding foods into said container;
heating foods until a predetermined temperature is reached;
chopping foods until desired consistency of food is reached; and
heating foods for a predetermined time interval or until foods are properly cooked.

23. A method according to Claim 22, wherein said step of heating foods includes a heating operation and a stirring operation, wherein said stirring operation is concurrent with said heating operation to facilitate fluid flow while said heating operation is on going, thereby promoting uniform heating of foods and minimizing the risk of burning of foods.

24. A method according to Claim 22 or 23, wherein said step of chopping foods includes a plurality of chopping cycles and wherein within each chopping cycle, said blade means chops foods for a predetermined time interval and then dwells for a predetermined time interval.

25. A method according to Claim 22, 23 or 24, wherein said step of boiling foods includes a plurality of heating cycles and wherein within each heating cycle, said heating means heats foods for a predetermined time interval and then dwells for a predetermined time interval, thereby allowing more time for the heat generated to dissipate to foods while said heating means dwells.
